# EUROPEAN PATENT APPLICATION

(11) **EP 2 255 863 A1**
(43) Date of publication of application: **01.12.2010**
(21) Application number: 09161097.2
(22) Date of filing: 26.05.2009
(51) Int. Cl.: B01D 53/00, F25J 3/06, C10L 3/10

(54) **Process for removing gaseous contaminants from a liquid phase containing feed stream**

(71) Applicant: Shell Internationale Research Maatschappij B.V., 2596 HR Den Haag (NL)
(72) Inventor: Geers, Henricus Abraham, 2288 GS Rijswijk (NL); Klaver, Theodorus Cornelis, 2288 GS Rijswijk (NL)
(74) Representative: Matthezing, Robert Maarten

(57) **Abstract**

The invention provides a process for removing contaminant from a liquid phase containing feed stream having a temperature of less than -40 °C and a pressure of less than 110 bara, which feed stream comprises a liquid phase or a liquid phase and a gaseous phase, the liquid phase comprising liquid phase contaminant and the gaseous phase comprising a gaseous product and gaseous contaminants such as carbon dioxide and hydrogen sulfide, the process comprising:
1) providing the feed stream;
2) lowering the pressure and/or the temperature of the feed stream to obtain a stream having a pressure between 30 and 70 bara and a temperature between -50 and -85 °C;
3) cooling the stream as obtained in step 2) further to a temperature at which a slurry is formed which comprises solid contaminant, liquid phase contaminant and a gaseous phase rich in gaseous product;
4) introducing the slurry obtained in step 3) into a gas/liquid/solids separation device; and
5) removing from the separation device a gas stream rich in gaseous product and a stream comprising solid contaminant and/or liquid phase contaminant.

## Description

The present invention concerns a process for the removal of contaminants from a liquid phase containing feed stream having a temperature of less than -40 °C and a pressure of less than 110 bara, which feed stream comprises a liquid phase or a liquid phase and a gaseous phase, the liquid phase comprising liquid phase contaminant and the gaseous phase comprising a gaseous product and gaseous contaminants.

Gas streams produced from subsurface reservoirs such as natural gas, associated gas and coal bed gas methane, or from (partial) oxidation processes, usually contain in addition to the gaseous product concerned such as methane, hydrogen and/or nitrogen contaminants as carbon dioxide, hydrogen sulphide, carbon oxysulphide, mercaptans, sulphides and aromatic sulphur containing compounds in varying amounts. For most of the applications of these gas streams, the contaminants need to be removed, either partly or almost completely, depending on the specific contaminant and/or the use. Often, the sulphur compounds need to be removed into the ppm level, carbon dioxide sometimes up till ppm level, e.g. LNG applications, or up till 2 or 3 vol. percent, e.g. for use as heating gas. Higher hydrocarbons may be present, which, depending on the use, may be recovered.

Processes for the removal of carbon dioxide and sulphur compounds are know in the art. These processes include absorption processes using e.g. aqueous amine solutions or molecular sieves. These processes are especially suitable for the removal of contaminants,
especially carbon dioxide and hydrogen sulphide that are present in relatively low amounts, e.g. up till several vol%.

In WO 2006/087332, a method has been described for removing contaminating gaseous components, such as carbon dioxide and hydrogen sulphide, from a natural gas stream. In this method a contaminated natural gas stream is cooled in a first expander to obtain an expanded gas stream having a temperature and pressure at which the dewpointing conditions of the phases containing a preponderance of contaminating components, such a carbon dioxide and/or hydrogen sulphide are achieved. The expanded gas stream is then supplied to a first segmented centrifugal separator to establish the separation of a contaminants-enriched liquid phase and a contaminants-depleted gaseous phase. The contaminants-depleted gaseous phase is then passed via a recompressor, an interstage cooler, and a second expander into a second centrifugal separator. The interstage cooler which is based on a natural gas loop and the second expander are used to cool the contaminants-depleted gaseous phase to such an extent that again a contaminants-enriched liquid phase and a further contaminates-depleted gaseous phase are obtained which are subsequently separated from each other by means of the second centrifugal separator. In such a method energy recovered from the first expansion step is used in the compression step, and an internal natural gas loop is used in the interstage cooler.

A disadvantage of this known method is that there is still room for improvement in terms of removal of the gaseous contaminants. Moreover, the use of a recompressor, interstage cooler and an expander between the two centrifugal separators affects the energy efficiency of the separation process, which energy efficiency is a measure of the fuel gas consumption and the hydrocarbon loss in the liquid phase contaminant streams during the process.

It has now been found that from a liquid phase containing feed stream meeting particular temperature and pressure requirements contaminants such as carbon dioxide and hydrogen sulphide can very effectively be removed, when use is made of a particular sequence of cooling steps followed by a cryogenic separation step. Moreover, by using the specific sequence of cooling steps the energy efficiency of the overall processing can be improved.

Accordingly, the present invention provides a process for removing contaminant from a liquid phase containing feed stream having a temperature of less than -40 °C and a pressure of less than 110 bara, which feed stream comprises a liquid phase or a liquid phase and a gaseous phase, the liquid phase comprising liquid phase contaminant and the gaseous phase comprising a gaseous product and gaseous contaminants, the process comprising:
1) providing the feed stream;
2) lowering the pressure and/or the temperature of the feed stream to obtain a stream having a pressure between 30 and 70 bara and a temperature between -50 and -85 °C;
3) cooling the stream as obtained in step 2) further to a temperature at which a slurry is formed which comprises solid contaminant, liquid phase contaminant and a gaseous phase rich in gaseous product;
4) introducing the slurry obtained in step 3) into a gas/liquid/solids separation device; and
5) removing from the separation device a gas stream rich in gaseous product and a stream comprising solid contaminant and/or liquid phase contaminant.

The gas stream obtained in accordance with the present process contains very low amounts of contaminants.

Suitably, the solid contaminant, liquid phase contaminant and gaseous contaminants are carbon dioxide and/or hydrogen sulphide.

The feed stream provided in step 1) has a temperature of less than -40 °C and a pressure of less than 110 bara.

The stream as obtained in step 2) has preferably a temperature between 1 and 40 °C, more preferably between 2 and 20 °C above the temperature at which carbon dioxide freezes from the feed stream.

In step 2) of the process according to the present invention, the pressure and/or the temperature of the feed stream are preferably lowered to obtain a stream having a pressure between 40 and 60 bara and a temperature between - 60 and -80 °C.

In other words, in step 2) the pressure of the feed stream can preferably be lowered to obtain a stream having a pressure between 40 and 60 bara and a temperature between -60 and -80 °C, the temperature of the feed stream can preferably be lowered to obtain a stream a pressure between 40 and 60 bara and a temperature between -60 and -80 °C, or the pressure and the temperature of the feed stream can both preferably be lowered to obtain a stream having a pressure between 40 and 60 bara and a temperature between - 60 and -80 °C.

Preferably, in step 3) of the present process the stream as obtained in step 2) is cooled to a temperature between -75 and -110 °C, more preferably between -80 and - 105 °C.

In step 3), the stream as obtained in step 2) is preferably cooled by isenthalpic expansion, more preferably isenthalpic expansion over an orifice or a valve, especially a Joule-Thomson valve.

Preferably, the feed stream provided in step 1) comprises more than 80 vol% of liquid phase.

More preferably, the feed stream as provided in step 1) consists entirely of the liquid phase.

Preferably, the liquid phase containing feed stream to be provided in step 1) is a dehydrated feed stream. In the context of the present invention a "dehydrated feed stream" is a feed stream from which water is removed until the amount of water in the feed stream is less than 20 ppmv, preferably less than 5 ppmv, more preferably less than 1 ppmv.

Suitably, the feed stream provided in step 1) is obtained by cooling a feed gas stream which comprises the gaseous product and gaseous contaminants by nearly isentropic expansion, especially by means of an expander, preferably a turbo expander or a laval nozzle; by isenthalpic expansion, preferably isenthalpic expansion over an orifice or a valve, especially a Joule-Thomson valve; and/or by isobaric cooling, preferably isobaric cooling using one or more heat exchangers.

In a preferred embodiment of the present invention, the feed stream provided in step 1) is obtained by cooling the feed gas stream in a step a) by nearly isentropic expansion, especially by means of an expander, preferably a turbo expander or a laval nozzle, and/or by isenthalpic expansion, preferably isenthalpic expansion over an orifice or a valve, especially a Joule-Thomson valve, to a first temperature, and cooling the stream so obtained in a step b) by isobaric cooling, preferably isobaric cooling over one or more heat exchangers, to a second temperature which is lower than the first temperature.

In another preferred embodiment of the present invention, the feed stream provided in step 1) is obtained by cooling the feed gas stream in a step a) by isobaric cooling, preferably isobaric cooling over one or more heat exchangers, to a first temperature, and cooling the stream so obtained in a step b) by nearly isentropic expansion, especially by means of an expander, preferably a turbo expander or a laval nozzle, and/or by isenthalpic expansion, preferably isenthalpic expansion over an orifice or a valve, especially a Joule-Thomson valve, to a second temperature which is lower than the first temperature.

In these preferred embodiments, the first temperature in step a) is preferably between -75 and 15 °C, and the pressure of the stream so obtained is preferably between 40 and 150 bara.

Preferably, at the first temperature liquid phase contaminant is formed as well as a gaseous phase rich in gaseous product.

Suitably, the feed gas stream is a natural gas and comprises between 10 and 90 vol% of carbon dioxide, between 0.1 and 60 vol% of hydrogen sulphide, and between 20 and 80 vol% of methane.

Preferably, the feed gas stream gas has a pressure between 110-150 bara. More preferably, the feed gas stream is a dehydrated feed gas stream having a pressure between 110-150 bara. Most preferably, the feed gas stream is a dehydrated natural gas having a pressure between 110-150 bara.

As will be clear from the above there exist a number of ways to obtain the liquid phase containing feed stream provided in step 1) from a feed gas stream, for instance, a feed gas stream from a subsurface reservoir. The following modes of operation constitute suitable embodiments to obtain the liquid phase containing feed stream as provided in step 1) from a feed gas stream. These embodiments illustrate, but do not limit in any way, the present invention.
A. A dehydrated natural gas stream having a pressure between 110-150 bara is cooled in a step a) by means of isenthalpic expansion, preferably isenthalpic expansion over a valve, especially a Joule-Thomson valve, to a temperature between -15 and 15 °C, whereby the stream so obtained has a pressure between 40 and 80 bara. The stream so obtained is then subjected to a single isobaric cooling step or a sequence of isobaric cooling steps. In the isobaric coolings step(s) use can be made of heat exchangers. If use is made of a single isobaric cooling step, the stream having temperature between -15 and 15 °C and a pressure between 40 and 80 bara is preferably cooled by means of a heat exchanger to obtain a stream having a temperature between -85 and -60 °C and a pressure between 40 and 80 bara. In case, two or more isobaric coolings steps are used, the following embodiments are possible. The stream as obtained in step a) and having a temperature between -15 and 15 °C and a pressure between 40 and 80 bara is first preferably cooled by means of a first heat exchanger to obtain a stream having a temperature between - 40 and -25 °C and a pressure between 40 and 80 bara. Subsequently, the stream so obtained is cooled, preferably by means of a second heat exchanger, to obtain a stream having a temperature between -60 and -40 °C and a pressure between 40 and 80 bara. The stream so obtained is then cooled, preferably, by means of a third heat exchanger to obtain a stream having a temperature between -85 and -60 °C and a pressure between 40 and 80 bara. Alternatively, the stream as obtained in step a) and having temperature between -15 and 15 °C and a pressure between 40 and 80 bara is first cooled, preferably by means of a first heat exchanger, to obtain a stream having a temperature between -60 and -40 °C and a pressure between 40 and 80 bara. Subsequently, the stream so obtained is preferably cooled by means of a second heat exchanger to obtain a stream having a temperature between -85 and -60 °C and a pressure between 40 and 80 bara.
B. A dehydrated natural gas stream having a pressure between 110-150 bara is cooled in a step a) by nearly isentropic expansion, especially by means of an expander, preferably a turbo expander, to obtain a stream having a temperature between -40 and -25 °C and a pressure between 40 and 80 bara. The stream so obtained can subsequently cooled by means of one or more isobaric cooling steps. The feed stream obtained in step a) is firstly cooled, preferably by means of a first heat exchanger, to obtain a stream having a temperature between -60 and -40 °C and a pressure between 40 and 80 bara. Subsequently, the stream so obtained is preferably cooled by means of a second heat exchanger to obtain a stream having a temperature between - 85 and -60 °C and a pressure between 40 and 80 bara. Alternatively, the stream as obtained in step a) and having temperature between -40 and -25 °C and a pressure between 40 and 80 bara is cooled in a single isobaric cooling step, wherein preferably use is made of a heat exchanger, to obtain directly a stream having a temperature between -85 and -60 °C and a pressure between 40 and 80 bara.
C. A dehydrated natural gas stream having a pressure between 110-150 bara is isobarically cooled, preferably, by means of a first heat exchanger to obtain a feed stream having a temperature between -20 and 10 °C and a pressure between 110 and 150 bara. The feed stream so obtained is then subjected to a second isobaric cooling step wherein preferably use is made of a second heat exchanger to obtain a stream having a temperature between -75 and -60 °C and a pressure between 110 and 150 bara. The stream obtained in this second isobaric cooling step can subsequently be subjected to one or more expansion steps to obtain a stream having a temperature between -85 and -60 °C and a pressure between 40 and 80 bara. The stream obtained in the second isobaric cooling step can be expanded in a single expansion step to obtain a stream having a temperature between -85 and -60 °C and a pressure between 40 and 80 bara.
   Preferably, in such an expansion step use is made of nearly isentropic expansion or isenthalpic expansion, whereby use can be made of a valve or a turbo expander respectively. Alternatively, the stream obtained in the second isobaric cooling step is firstly subjected to a first expansion step to obtain a stream having a temperature between -75 and - 60 °C and a pressure between 70 and 100 bara, whereafter the stream so obtained is subjected to a second expansion step to obtain a stream having a temperature between -85 and -60 °C and a pressure between 40 and 80 bara. In both the first and second expansion step use can be made of nearly isentropic expansion or isentropic expansion, or in the first expansion step use is made of nearly isentropic expansion and in the second expansion step use is made of isenthalpic expansion or vise versa. Preferably, in the isenthapic and nearly isentropic expansions, valves or turbo expanders are respectively used.
D. A dehydrated natural gas stream having a pressure between 110-150 bara is isobarically cooled, preferably by means of a first heat exchanger, to obtain a feed stream having a temperature between -20 and 10 °C and a pressure between 110 and 150 bara. The feed stream so obtained is then subjected to one or more expansion steps to obtain a stream having a tempereature between -60 and -40 °C and a pressure between 40 and 80 bara. The feed stream so obtained is then subjected to an isobaric cooling step wherein preferably use is made of a heat exchanger to obtain a stream having a temperature between -85 and -60 °C and a pressure between 40 and 80 bara. The feed stream having a temperature between -20 and 10 °C and a pressure between 110 and 150 bara can be subjected to a single expansion step using nearly isentropic or isenthalpic expansion, wherein preferably use is made of a valve or a turbo expander respectively, to obtain a stream having a temperature between between -60 and -40 °C and a pressure between 40 and 80 bara. Alternatively, the feed stream having a temperature between -20 and 10 °C and a pressure between 110 and 150 bara can be subjected to two separate expansion steps. In a first expansion step using nearly isentropic or isenthalpic expansion, a stream is obtained having a temperature between between -40 and -15 °C and a pressure and a pressure between 70 and 100 bara. In such isentropic expansion preferably use is made of a turbo expander, whereas in such isenthalpic expansion preferably use is made of a valve. Subsequently, the stream so obtained can be subjected to a second expansion step using nearly isentropic or isenthalpic expansion, wherein preferably use is made of a valve or a turbo expander respectively, to obtain a stream having a temperature between -60 and -40 °C and a pressure between 40 and 80 bara. Subsequently, the isobaric cooling step will be carried out to obtain the stream having a temperature between -85 and -60 °C and a pressure between 40 and 80 bara.
E. A dehydrated natural gas stream having a pressure between 110-150 bara is isobarically cooled by means of a first heat exchanger to obtain a feed stream having a temperature between -20 and 10 °C and a pressure between 110 and 150 bara. The feed stream so obtained is then subjected to an expansion step using nearly isentropic or isenthalpic expansion, wherein preferably use is made of a valve or a turbo expander respectively, to obtain a feed stream having a temperature between a temperature between between -40 and -15 °C and a pressure between 70 and 100 bara. Subsequently, the stream so obtaine can be subjected to a isobaric cooling step wherein preferably use is made of a heat exchanger to obtain a stream having a temperature between -75 and -60 °C and a pressure between 70 and 100 bara. The feed stream so obtained is then subjected to an expansion step using nearly isentropic or isenthalpic expansion, wherein preferably use is made of a valve or a turbo expander respectively, to obtain a stream having a temperature between -85 and -60 °C and a pressure between 40 and 80 bara.

The skilled person will understand that a wide variety of sequences of isobaric, isentropic and isenthalpic cooling steps can be used to obtain from a preferably dehydrated feed gas stream the liquid phase containing feed stream to be provided in step 1) of the process according to the present invention.

The present invention also relates to a device (plant) for carrying out the process as described above, as well as the purified gas stream obtained by the present process. In addition, the present invention concerns a process for liquefying a feed gas stream comprising purifying the feed gas stream by means of the present process, followed by liquefying the purified feed gas stream by methods known in the art.

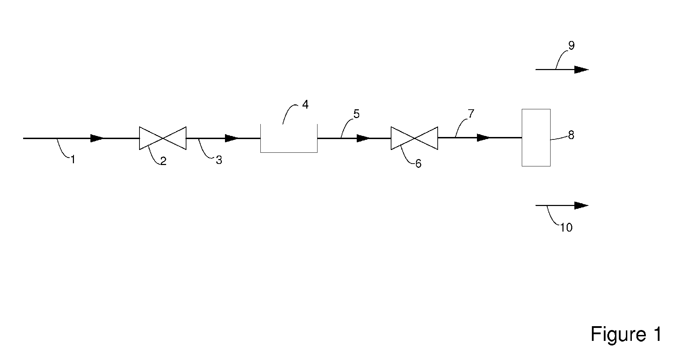

The invention will be further illustrated by means of Figure 1. In Figure 1, a dehydrated natural gas having a temperature of 40 °C and a pressure of 146 bara is passed via a conduit 1 through a turbo expander 2 wherein nearly isentropic expansion is applied, whereby a stream is obtained comprising liquid phase comprising as liquid phase contaminants carbon dioxide and hydrogen sulphide and a gaseous phase comprising as gaseous contaminants carbon dioxide and hydrogen sulphide. The stream so obtained has a temperature of -32 °C and a pressure of 52 bara. Subsequently, the stream so obtained is passed via a conduit 3 to a heat exchanger 4 wherein the stream is subjected to an isobaric cooling step. The stream so obtained has a temperature of -70 °C and a pressure of 52 bara. Subsequently, the stream so obtained is then passed via a conduit 5 through a valve 6 which involves isentropic cooling to obtain a slurry having a temperature of -104°C and a pressure of 10 bara. The slurry comprises solid carbon dioxide and hydrogen sulphide contaminants, liquid phase contaminant in the form of carbon dioxide and hydrogen sulphide, and a gaseous phase rich in methane. Subsequently, the slurry as introduced via a conduit 7 into a gas/liquid/solids separation device 8 from which a gaseous product rich in methane is removed via outlet means 9 and a stream comprising solid and/or liquid comprising carbon dioxide and hydrogen sulphide is removed via an outlet means 10.

## Claims

1. A process for removing contaminant from a liquid phase containing feed stream having a temperature of less than - 40 °C and a pressure of less than 110 bara, which feed stream comprises a liquid phase or a liquid phase and a gaseous phase, the liquid phase comprising liquid phase contaminant and the gaseous phase comprising a gaseous product and gaseous contaminants, the process comprising:
1) providing the feed stream;
2) lowering the pressure and/or the temperature of the feed stream to obtain a stream having a pressure between 30 and 70 bara and a temperature between -50 and -85 °C;
3) cooling the stream as obtained in step 2) further to a temperature at which a slurry is formed which comprises solid contaminant, liquid phase contaminant and a gaseous phase rich in gaseous product;
4) introducing the slurry obtained in step 3) into a gas/liquid/solids separation device; and
5) removing from the separation device a gas stream rich in gaseous product and a stream comprising solid contaminant and/or liquid phase contaminant.

2. A process according to claim 1, in which the solid contaminant, liquid phase contaminant and gaseous contaminants are carbon dioxide and/or hydrogen sulphide.

3. A process according to claim 1 or 2, in which the stream as obtained in step 2) has a temperature between 1 and 40 °C, preferably between 2 and 20 °C above the temperature at which carbon dioxide freezes from the feed stream.

4. A process according to any one of claims 1-3, in which in step 2) the pressure and/or the temperature of the feed stream are lowered to obtain a stream having a pressure between 40 and 60 bara and a temperature between -60 and - 80 °C.

5. A process according to any one of claims 1-4, in which in step 3) the stream is cooled to a temperature between - 75 and -110 °C, preferably between -80 and -105 °C.

6. A process according to any one of claims 1-5, in which in step 3) the stream is cooled by isenthalpic expansion, preferably isenthalpic expansion over an orifice or a valve, especially a Joule-Thomson valve.

7. A process according to any one of claims 1-6, in which the feed stream comprises more than 80 vol% of liquid phase.

8. A process according to any one of claims 1-7, in which the feed stream consists entirely of the liquid phase.

9. A process according to any one of claims 1-8, in which the feed stream provided in step 1) is obtained by cooling a feed gas stream which comprises the gaseous product and gaseous contaminants by nearly isentropic expansion, especially by means of an expander, preferably a turbo expander or a laval nozzle; by isenthalpic expansion, preferably isenthalpic expansion over an orifice or a valve, especially a Joule-Thomson valve; and/or by isobaric cooling, preferably isobaric cooling using one or more heat exchangers.

10. A process according to claim 9, in which the feed stream provided in step 1) is obtained by cooling the feed gas stream in a step a) by nearly isentropic expansion, especially by means of an expander, preferably a turbo expander or a laval nozzle, and/or by isenthalpic expansion, preferably isenthalpic expansion over an orifice or a valve, especially a Joule-Thomson valve, to a first temperature, and cooling the stream so obtained in a step b) by isobaric cooling, preferably isobaric cooling over one or more heat exchangers, to a second temperature which is lower than the first temperature.

11. A process according to claim 9, in which the feed stream provided in step 1) is obtained by cooling the feed gas stream in a step a) by isobaric cooling, preferably isobaric cooling over one or more heat exchangers, to a first temperature, and cooling the stream so obtained in a step b) by nearly isentropic expansion, especially by means of an expander, preferably a turbo expander or a laval nozzle, and/or by isenthalpic expansion, preferably isenthalpic expansion over an orifice or a valve, especially a Joule-Thomson valve, to a second temperature which is lower than the first temperature.

12. A process according to claim 10 or 11, in which the first temperature in step a) is between -75 and 15 °C, and the pressure of the stream so obtained is between 40 and 150 bara.

13. A process according to any one of claims 10-12, in which at the first temperature liquid phase contaminantis formed as well as a gaseous phase rich in gaseous product.

14. A process according to any one of claims 9-13, in which the feed gas stream is a natural gas and comprises between 10 and 90 vol% of carbon dioxide, between 0.1 and 60 vol% of hydrogen sulphide, and between 20 and 80 vol% of methane.

15. Purified feed gas stream obtained by a process according to any one of claims 1-14.

16. A process for liquefying a feed gas stream comprising purifying the feed gas stream according to any one of claims 1-14, followed by liquifying the purified fee gas stream by methods known in the art.
